# FASCICULE DE BREVET EUROPEEN

(11) **EP 0 569 306 B1**
(45) Date de publication et mention de la délivrance du brevet: **20.03.1996**
(21) Numéro de dépôt: 93420179.9
(22) Date de dépôt: 03.05.1993
(51) Int. Cl.: H02K 5/22, H02K 5/12, H02K 21/18, F04D 13/06

(54) **Perfectionnement pour moteur électrique et pompe hydraulique équipée d'un tel moteur**
Verbesserung an einem Elektromotor und hydraulische Pumpe damit ausgerüstet
Improvements to an electric motor and hydraulic pump using this motor

(30) Priorité: 05.05.1992 FR 9205755
(43) Date de publication de la demande: 10.11.1993
(73) Titulaire: RENA FRANCE (S.A.), F-74000 Annecy (FR)
(72) Inventeur: Camps, Didier, F-74300 Thyez (FR); Evreux, Gérard, F-74130 Ayze (FR); Holtzmann, André, F-74960 Meythet (FR)
(74) Mandataire: Gasquet, Denis

(56) Documents cités:
- FR-A- 2 386 925
- FR-A- 2 583 112
- GB-A- 2 024 528
- US-A- 1 827 323
- US-A- 3 959 675
- PATENT ABSTRACTS OF JAPAN vol. 9, no. 140 (E-321)(1863) 14 Juin 1985 ; & JP-A-60 022 457

## Description

La présente invention concerne un moteur électrique et plus particulièrement un perfectionnement pour un moteur pouvant être immergé.

On connait déjà des moteurs électriques de petite puissance, et qui comprennent un rotor tournant dans le champ magnétique d'un stator excité par le champ électrique d'une bobine alimentée en courant électrique. Ce type de moteur est bien connu en soi et est très largement utilisé dans la vie courante. On connait par exemple les moteurs décrits dans les demandes de brevet françaises, publiées sous les numéros 2 386 184 et 2 596 217.

Toutefois, les moteurs connus et commercialisés n'offrent pas à l'utilisateur une sécurité suffisante, car bien souvent la mise à la terre est insuffisante et de ce fait, inefficace, voire même inexistante, et quand cette mise à la terre existe, son prix de revient est élevé. Ceci est d'autant plus vrai lorsque le moteur est utilisé dans des conditions particulières, comme quand il est destiné à fonctionner dans un milieu humide, voire même immergé, comme ce peut être le cas d'une utilisation pour énergiser une pompe à eau immergée dans un aquarium ou un bassin. Dans ce type d'utilisation, il est important, pour la sécurité de l'utilisateur, que le moteur ainsi que l'eau soient mis à la terre de façon sûre.

Ainsi l'objet de la présente invention est de proposer un moteur comprenant une liaison équipotentielle entre les deux masses polaires du stator, qui est reliée à la prise de terre. L'invention propose aussi un moyen de mise à la terre de l'eau quand le moteur est destiné à être immergé.

Ainsi, le moteur électrique selon l'invention du type comprenant un rotor tournant entre les deux pôles d'un stator excité par le champ électrique d'un bobinage constitué par un enroulement d'excitation bobiné sur un support de bobinage comprenant un logement tubulaire transversal, est caractérisé en ce qu'il comprend une pièce de mise à la terre reliant électriquement le noyau magnétique à la prise de terre, et en ce que cette prise de terre est disposée dans ledit logement tubulaire central pour s'étendre extérieurement et constituer une broche de branchement destinée à être reliée à la prise de terre.

Selon une caractéristique complémentaire, le stator est constitué par deux masses polaires indépendantes dont les noyaux magnétiques sont engagés dans le logement tubulaire central du support de bobinage, la pièce de mise à la terre étant aussi une pièce de liaison électrique reliant électriquement les noyaux magnétiques de chacune des deux masses polaires.

Selon une disposition complémentaire, la pièce de liaison électrique et de mise à la terre comprend une branche longitudinale disposée entre les deux noyaux magnétiques et l'une des parois internes du support de bobinage. Selon une configuration avantageuse, ladite pièce de mise à la terre est une pièce métallique ayant la forme générale d'un T, la branche longitudinale étant prolongée latéralement de part et d'autre du plan de symétrie générale par une branche transversale repliée verticalement dont l'une des extrémités constitue la broche de branchement à la terre.

Selon une caractéristique complémentaire et préférée de l'invention, la branche longitudinale est disposée entre les surfaces inférieures des deux noyaux magnétiques et la paroi inférieure interne du logement tubulaire.

Selon des caractéristiques complémentaires, la broche de branchement à la terre est disposée dans le plan des plaquettes de connexion du bobinage et parallèlement à celles-ci, et sa largeur est différente de celle des plaquettes de connexion, et sa longueur est telle que son extrémité se trouve être en retrait.

Selon d'autres caractéristiques, la branche de liaison longitudinale de la pièce de mise à la terre est retenue par le support de bobinage qui comprend un creux de guidage et des crans de retenue. Par ailleurs, ladite branche est en matériau élastique conducteur, et notamment en acier et comprend une succession d'ondulations.

Dans le mode de réalisation représenté, le moteur électrique selon l'invention est destiné à entraîner une turbine pour former une pompe hydraulique qui peut être immergée par exemple dans un aquarium; aussi, l'ensemble statorique constitué des deux masses polaires et l'ensemble d'excitation sont logés dans la cavité interne d'un boîtier de moteur, qui comprend un matériau de remplissage et d'isolation électrique, dans lequel se trouve complètement noyé ledit ensemble statorique. La pièce de mise à la terre comprenant par ailleurs une branche dont l'extrémité fait saillie hors du matériau de remplissage pour se trouver en contact avec l'eau.

D'autres caractéristiques et avantages de l'invention se dégageront de la description qui va suivre en regard des dessins annexés qui ne sont donnés qu'à titre d'exemples non limitatifs.

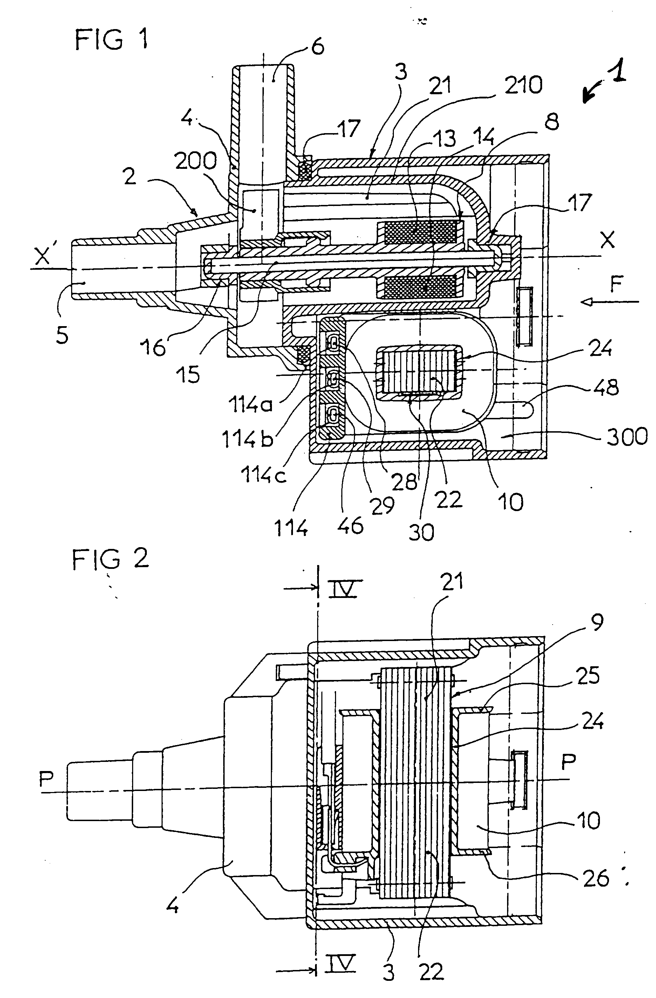

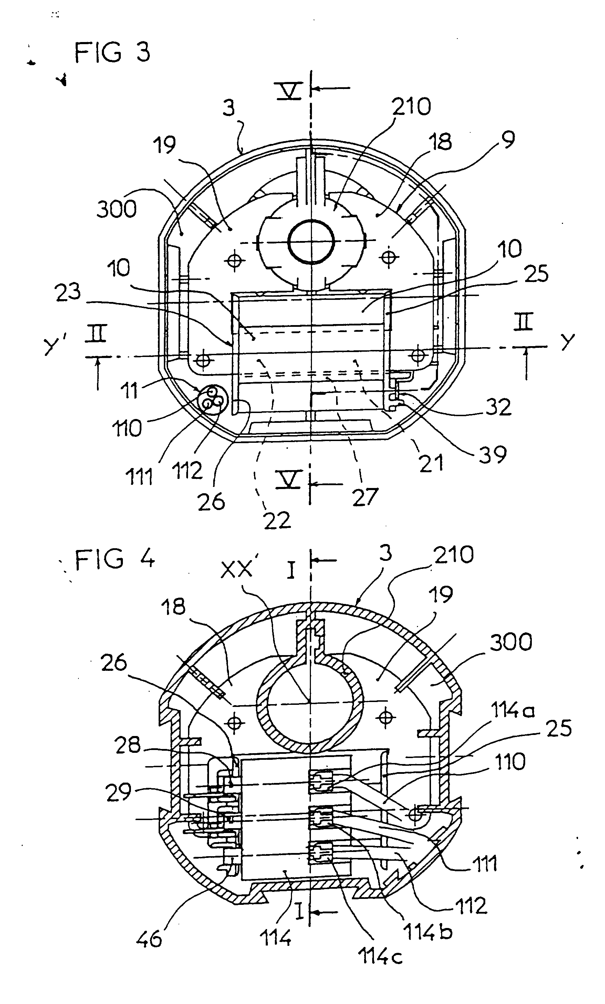

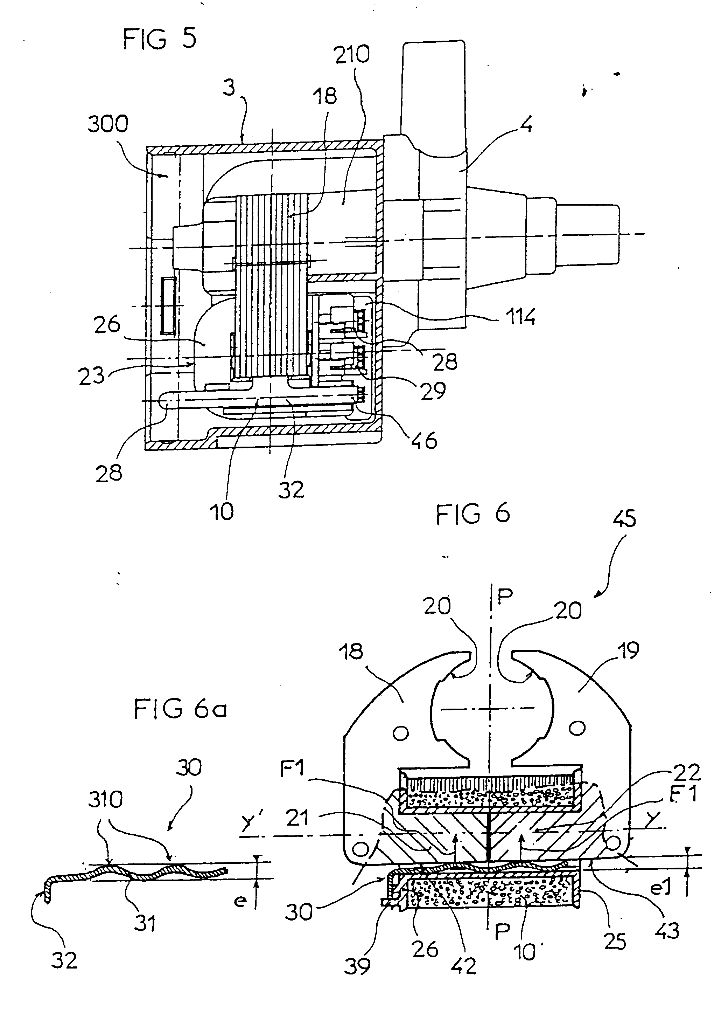

Les figures 1 à 5 illustrent le moteur dans son contexte d'utilisation, c'est-à-dire logé dans un boîtier et entraînant la turbine d'une pompe hydraulique.

La figure 1 est une vue en coupe selon I-I de la figure 4.

La figure 2 est une vue en coupe selon II-II de la figure 3.

La figure 3 est une vue selon F de la figure 1 avant que l'ensemble statorique soit noyé dans la résine.

La figure 4 est une vue en coupe selon IV-IV de la figure 2, avant que l'ensemble statorique soit noyé dans la résine.

La figure 5 est une vue en coupe selon V-V de la figure 3.

La figure 6 est une vue en coupe transversale partielle de l'ensemble statorique, avant que l'ensemble statorique soit noyé dans la résine.

La figure 6a est une vue partielle montrant des détails de construction.

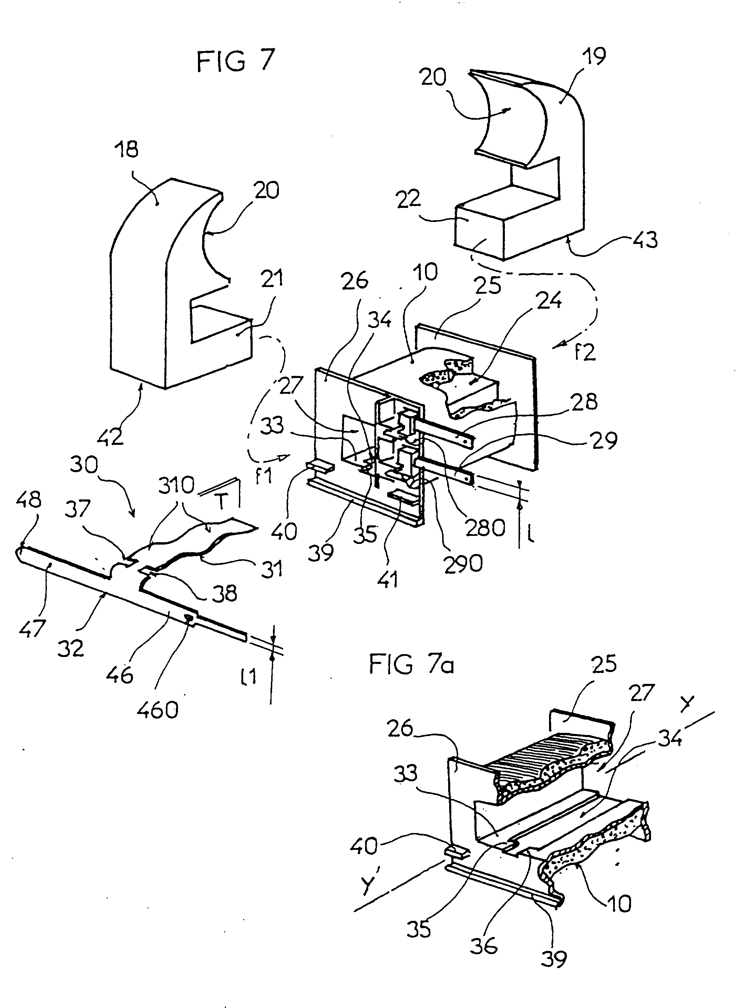

La figure 7 est une vue en perspective éclatée montrant les différents éléments constituant l'ensemble statorique, le bobinage ayant été arraché localement pour mieux illustrer le support correspondant.

La figure 7a est une vue avec arrachement partiel montrant plus particulièrement le bobinage sur son support.

La figure 8 est une vue en perspective montrant l'ensemble statorique monté ainsi que son cordon d'alimentation et de mise à la terre.

La figure 9 est une vue en perspective illustrant l'ensemble statorique connecté avec son cordon d'alimentation.

La figure 10 est une vue similaire à la figure 9 montrant l'ensemble statorique dans sa partie prête à être introduite dans le boîtier correspondant.

La figure 11 est une vue en perspective montrant le boîtier de moteur avec l'ensemble statorique noyé dans la résine.

La figure 12 est une vue similaire à la figure 8, montrant une variante d'exécution.

Selon le mode de réalisation représenté, le moteur selon l'invention et portant la référence générale (1) est illustré à titre d'exemple dans une utilisation non exclusive, dans laquelle il est destiné à entraîner une turbine (2) de circulation d'eau pour constituer ainsi une pompe rotative qui peut être utilisée par exemple dans un aquarium ou un bassin. Ladite pompe pouvant être immergée ou non. A cet effet, le moteur (1) ainsi que la turbine (2) proprement dite sont disposés à l'intérieur de boîtiers (3, 4) avantageusement réalisés par moulage en matière plastique, le moteur (1) étant dans un boîtier de moteur (3), tandis que la turbine (2) qui comprend des ailettes axiales (200), est logée dans un boîtier de turbine (4) comprenant un orifice axial d'entrée d'eau (5) et un orifice radial ou tangentiel de sortie d'eau (6). La liaison étanche entre le boîtier de moteur (3) et le boîtier de turbine (4) étant assurée par un joint d'étanchéité (7). Ledit boîtier de moteur (3) comprenant une cavité interne (300) destinée à recevoir l'ensemble statorique du moteur, le rotor étant quant à lui, logé dans un autre logement ou logement de rotor (21), qui est fermé du coté de la cavité interne (300) par une paroi (210), pour être ouvert du coté de la turbine (2, 200).

Le moteur (1) est par exemple du type "synchrone" et comprend un rotor (8) formant aimant permanent, tournant dans un champ magnétique créé par un stator (9) excité par le champ électrique d'un bobinage (10) relié à une alimentation en courant alternatif grâce à un cordon d'alimentation (11) comprenant une fiche électrique (12).

Le moteur, dans sa structure globale, étant connu en soi, ne sera pas décrit dans les détails. Notons seulement que le rotor (8) comprend deux aimants permanents (13, 14) et qu'il est monté en rotation autour d'un axe (XX') matérialisé par un axe (15) retenu par deux paliers d'extrémité (16, 17). Il est par ailleurs logé dans le logement de rotor (21), de telle sorte que l'un des paliers (17) est solidaire de la paroi interne (210) du logement de rotor, tandis que l'autre (16) est solidaire du boîtier de turbine (2).

Selon une disposition avantageuse, le stator (9) est formé de deux masses polaires (18, 19) indépendantes, constituées chacune d'un empilage d'éléments en tôle de fer au silicium. Chaque masse polaire comprend une surface courbe (20) ayant la forme d'une portion de cylindre d'axe (XX') délimitant ainsi entre le rotor (8) et le stator (9), l'entrefer "e" nécessaire et dans lequel la paroi cylindrique du logement du rotor (21) prend place. Par ailleurs, la partie inférieure de chacune des masses polaires (18, 19) comprend un noyau magnétique (21, 22) ayant la forme d'un profil de section rectangulaire, s'étendant transversalement vers le plan (P) de symétrie générale.

Le bobinage (10) est réalisé par l'enroulement d'un fil électrique bobiné autour d'un support de bobinage (23), réalisé en matière plastique et qui comprend une partie centrale tubulaire (24) de section rectangulaire et qui est limité latéralement par deux flasques d'extrémité (25, 26). Le bobinage (10) s'étendant autour de la partie centrale (24) du support (23) entre les deux flasques d'extrémité (25, 26). ladite partie centrale tubulaire (24) constituée par un ensemble de parois, forme un logement tubulaire transversal (27) d'axe (YY'), de section rectangulaire, destiné à recevoir les deux noyaux magnétiques (21, 22). Les deux flasques d'extrémité (20, 26) étant parallèles au plan "P" de symétrie générale du moteur.

Par ailleurs, le premier flasque (25) est sensiblement plan, tandis que le deuxième flasque (26) comprend un certain nombre de saillies et de creux, et constitue un flasque de connexion ayant deux plaquettes métalliques de connexion (28, 29) parallèles et disposées initialement dans un plan perpendiculaire à l'axe (YY'). L'une des extrémités (280) du fil de bobinage étant reliée à la plaquette supérieure (28), tandis que l'autre (290) est reliée à la plaquette inférieure (29). L'introduction des deux noyaux magnétiques (21, 22) dans le logement tubulaire (27) se faisant de part et d'autre du support. Ainsi, l'un des noyaux magnétiques (21) est engagé dans le logement (27) par l'une des extrémités selon "f1", tandis que l'autre noyau magnétique (22) est engagé par l'autre extrémité selon "f2".

Selon l'invention, le moteur comprend une pièce de mise à la terre (30) réalisée par découpage, formage et pliage d'une feuille d'acier. Cette pièce de mise à la terre (30) a la forme générale d'un T et comprend une branche longitudinale (31) et une branche transversale (32) s'étendant de part et d'autre du plan de symétrie générale (T). La branche longitudinale (31) est, selon une caractéristique de l'invention, destinée à prendre place dans le logement tubulaire (27) du support de bobinage (23), sous les noyaux magnétiques (21, 22). A cet effet, la paroi inférieure interne (33) dudit logement tubulaire (27) comprend un creux de guidage (34) pour la branche longitudinale (30) et deux saillies d'extrémité (35, 36) destinées à coopérer avec deux crans latéraux (37, 38) de forme complémentaire, réalisés dans la branche longitudinale de la pièce de mise à la terre. Le creux de guidage (34) est destiné à maintenir la pièce (30) dans l'axe du logement tubulaire (27), tandis que la coopération des saillies (35, 36) avec les crans (37, 38) est destinée à assurer la retenue de celles-ci. La branche longitudinale (31) constitue un organe destiné à assurer d'une part la liaison électrique équipotentielle entre les deux noyaux magnétiques (21, 22) des deux masses polaires (18, 19), et d'autre part, le maintien desdits noyaux magnétiques à l'intérieur du logement tubulaire. Pour assurer cette liaison électrique de façon sûre ainsi que ce maintien, ladite branche (31) présente une succession d'ondulations (310) de façon à ce que l'épaisseur "e" de la pièce au repos soit légèrement supérieure à l'espace "e1" disponible, ceci afin de créer, par compression des ondulations, un serrage suffisant par sollicitation vers le haut selon "F1" des deux noyaux magnétiques (21, 22).

Par ailleurs, la branche transversale (32) est repliée à 90° par rapport au plan général de la branche longitudinale (31) pour être retenue sur le flasque (25) vers le bas par un rebord inférieur de retenue (39) et vers le haut, par deux rebords supérieurs de retenue (40, 41). Lesdits rebords de retenue (39, 40, 41) faisant saillie par rapport au plan général du flasque d'extrémité correspondant (25).

Ainsi, avant le raccordement au cordon d'alimentation, le sous-ensemble statorique (45) constitué des deux masses polaires (18, 19) du bobinage (10) et de la pièce de mise à la terre (30) constitue un ensemble de pièces solidaires les unes aux autres, qui peut être manipulé dans de bonnes conditions, et ce, grâce à l'élasticité de la branche longitudinale (31) de la pièce de mise à la terre (30) disposée entre les surfaces inférieures (42, 43) et la paroi inférieure interne (33, 34) du support de bobinage.

Par ailleurs, la branche transversale (32) de la pièce de mise à la terre s'étendant de part et d'autre du plan (T) de symétrie générale, comprend deux prolongements transversaux (46, 47). L'un des prolongements (46) constituant une broche de branchement, tandis que l'extrémité (48) de l'autre des prolongements (47) constitue un élément de mise à la terre de l'eau, destiné à faire saillie hors de la partie étanche et à se trouver ainsi en contact avec l'eau de l'aquarium ou du bassin dans lequel peut être immergé l'ensemble de la pompe avec le moteur. En effet, comme nous le verrons plus loin, la cavité interne (300) après avoir reçu l'ensemble statorique (45) est remplie d'un matériau de remplissage noyant complètement ledit ensemble statorique pour en assurer l'isolation électrique.

Le cordon d'alimentation (11) est un câble électrique du type à trois fils conducteurs (110, 111, 112) comprenant à l'une des extrémités, une fiche de branchement (12) du type ayant une prise de terre (113) connectée au fil de terre (112), et à l'autre des extrémités, un connecteur (114) comprenant trois connexions (114a, 114b, 114c). Les connexions (114a) et (114b) reliées aux fils d'alimentation (110, 111), étant destinées à être connectées aux deux plaquettes de connexion (28, 29) du bobinage, tandis que la connexion inférieure (114c) reliée au fil de masse (112) est destinée à être connectée à la broche de branchement (46) de la pièce de mise à la terre (30).

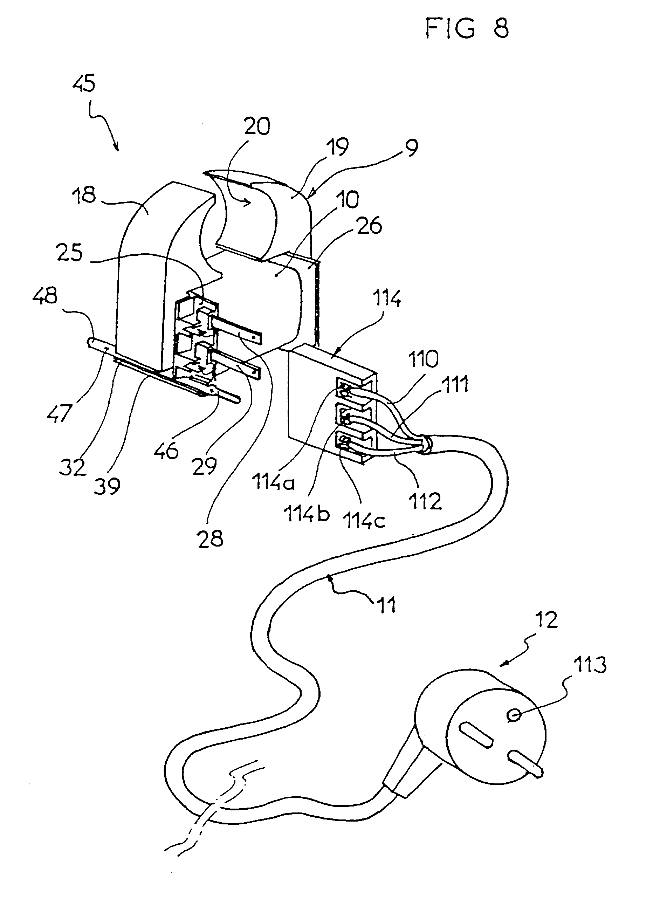

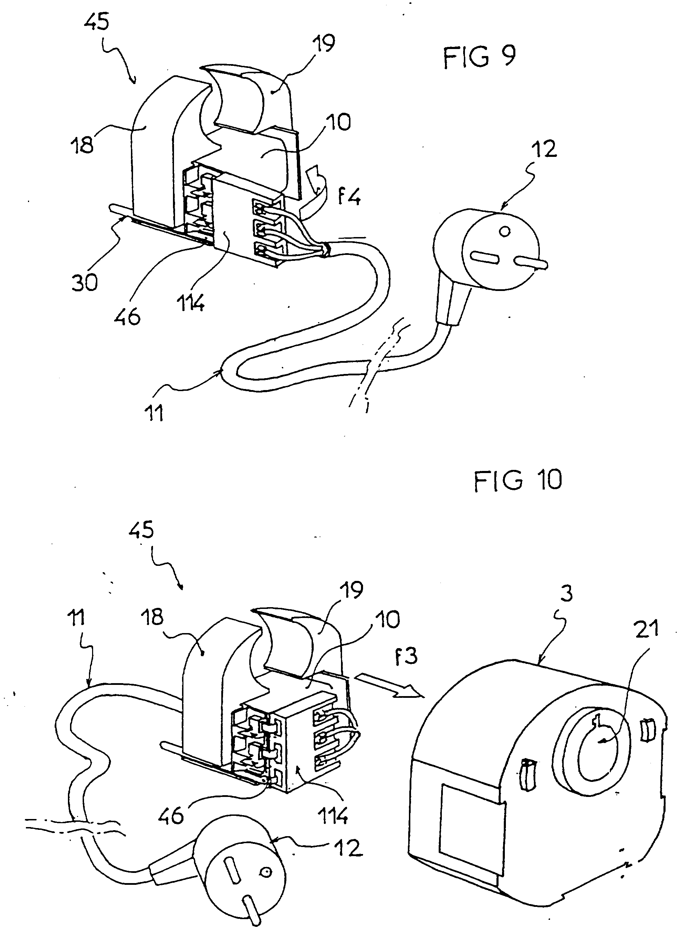

Le branchement et le montage de l'ensemble statorique (45) dans le boîtier se fait comme suit. Partant de la position illustrée à la figure 8, on branche le cordon d'alimentation (11) comme cela est représenté à la figure 9, le connecteur (114) étant alors disposé perpendiculairement au plan général des masses polaires.

Avant son introduction selon "f3" dans le boîtier (3), on fait pivoter selon "f4" le connecteur (114) pour le plaquer contre l'ensemble statorique (45). Ce pivotement de 90° se fait par déformation et pliage simultané des plaquettes de connexion (28, 29) du bobinage (10) et de la broche de branchement (46) de la pièce de mise à la terre (30). Une fois l'ensemble statorique (45) disposé dans le boîtier, on coule à l'intérieur de ce dernier, une résine (50) telle que du type polyurethane, afin de noyer complètement ledit ensemble statorique (45), à l'exception de l'extrémité (28) de la branche transversale (32) de la pièce de mise à la terre (30). Un capot de fermeture (301) peut être clipsé sur le boîtier de moteur (3) afin d'assurer un meilleur aspect au produit.

Notons qu'avantageusement, la branche transversale de branchement (46) comprend un trou (460) pour constituer une zone précise de pliage lors de l'opération de pivotement du connecteur (114). Par ailleurs, la largeur "l1" de la broche de branchement (46) est différente de la largeur "l" des deux plaquettes de connexion (28, 29); la largeur "11" est par exemple et avantageusement inférieure à la largeur "1". Cette disposition constituant un moyen de détrompage, empêchant une mauvaise connexion. A savoir que le connecteur (114) ne pourra pas être branché à l'envers. On notera aussi que la longueur de la branche (46) est telle que son extrémité (461) se trouve être en retrait par rapport aux extrémités (280, 290) des deux plaquettes (28, 29).

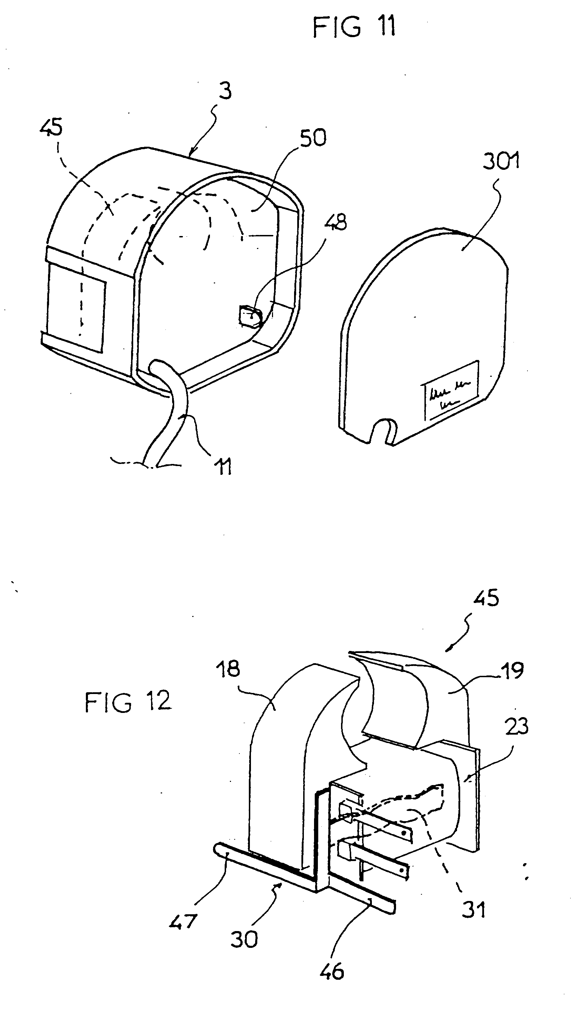

Il va de soi que la branche de liaison (30), bien que disposée tel qu'illustré, dessous les noyaux polaires pourrait être disposée à d'autres endroits, et notamment latéralement, comme cela est représenté à la figure 12.

Il va de soi aussi, que l'on ne sortirait pas du cadre de l'invention si le stator (9) n'était pas constitué de deux masses polaires indépendantes, mais ne comprenait qu'une seule masse unitaire. Ce serait le cas si les deux noyaux magnétiques (21, 22) ne constituait qu'un seul noyau magnétique.

Par ailleurs, la partie centrale tubulaire (24) du support de bobinage pourrait être cylindrique.

Notons aussi que l'invention peut être utilisée sur tout type de moteur électrique, qu'il soit synchrone ou asynchrone, et que la branche de mise à la terre (46) ne pourrait qu'être destinée à mettre l'eau à la masse. Dans ce cas, la pièce de mise à la terre (30) ne serait constitué que de la branche transversale (32).

## Revendications

1. Moteur électrique (1) du type comprenant un rotor (8) tournant entre les deux pôles d'un stator (9) excité par le champ électrique d'un bobinage (10) constitué par un enroulement d'excitation bobiné sur un support de bobinage (23) comprenant un logement tubulaire (27) dans lequel est logé le noyau magnétique (21, 22) dudit stator, caractérisé en ce qu'il comprend une pièce de mise à la terre (30, 31) reliant électriquement le noyau magnétique (21, 22) à la prise de terre (114c, 113) et en ce que cette prise de terre est disposée dans ledit logement tubulaire central (27) pour s'étendre extérieurement et constituer une broche de branchement (46, 460) destinée à être reliée à la prise de terre.

2. Moteur électrique selon la revendication 1, caractérisé en ce que la pièce de mise à la terre (30) comprend une branche longitudinale (31) disposée entre le noyau magnétique (21, 22) et l'une des parois internes (33) du support de bobinage (23).

3. Moteur électrique (1) selon la revendication 2, caractérisé en ce que le stator (9) est constitué par deux masses polaires indépendantes (18, 19) dont les noyaux magnétiques (21, 22) sont engagés dans le logement tubulaire central (27) du support de bobinage (23), et en ce qu'une pièce de liaison électrique et de mise à la terre (30, 31) reliant électriquement les noyaux magnétiques (21, 22) de chacune des deux masses polaires (18, 19) est disposée dans ledit logement tubulaire central (27) pour s'étendre extérieurement et constituer une broche de branchement (46, 460) destinée à être reliée à la prise de terre (114c, 113).

4. Moteur électrique selon la revendication 3, caractérisé en ce que la branche longitudinale (31) est disposée entre les surfaces inférieures (42, 43) des deux noyaux magnétiques (21, 22) et la paroi inférieure interne (33) du logement tubulaire (27).

5. Moteur électrique selon la revendication 4, caractérisé en ce que la broche de branchement à la terre (46) est disposée dans le plan des plaquettes de connexion (28, 29) du bobinage (10) et parallèlement à celles-ci.

6. Moteur électrique selon la revendication 5, caractérisé en ce que la broche de branchement à la terre (46) a une largeur différente de celle des plaquettes de connexion (28, 29).

7. Moteur électrique selon la revendication 6, caractérisé en ce que la longueur de la broche de mise à la terre (46) est telle que son extrémité (461) se trouve être en retrait par rapport aux extrémités (280, 290) des deux plaquettes de connexion (28, 29).

8. Moteur électrique selon l'une quelconque des revendications précédentes, caractérisé en ce que la paroi inférieure interne (33) comprend un creux de guidage (34) pour recevoir la branche longitudinale (31).

9. Moteur électrique selon la revendication 8, caractérisé en ce qu'il est prévu des moyens de retenue pour la branche longitudinale (31) constitués par la coopération d'au moins un cran (37, 38) réalisé sur ladite branche avec au moins une saillie (35, 36) réalisée dans la paroi inférieure interne (33) du support de bobinage (23).

10. Moteur électrique selon l'une quelconque des revendications précédentes, caractérisé en ce que la branche longitudinale (31) comprend une succession d'ondulations (310).

11. Moteur électrique selon l'une quelconque des revendications précédentes, caractérisé en ce que la pièce de mise à la terre (30) est une pièce métallique ayant la forme générale d'un T, la branche longitudinale (31) étant prolongée latéralement de part et d'autre du plan T de symétrie générale par une branche transversale (32) repliée verticalement dont l'une des extrémités (46) constitue la broche de branchement à la terre.

12. Moteur électrique selon l'une quelconque des revendications précédentes, caractérisé en ce que l'ensemble statorique (45) constitué des deux masses polaires (18, 19) et l'ensemble d'excitation (10, 23, 28, 29), est logé dans la cavité interne (300) d'un boîtier de moteur (3), qui comprend un matériau de remplissage et d'isolation électrique (50), dans lequel se trouve complètement noyé ledit ensemble statorique (45).

13. Moteur électrique selon la revendication 12, caractérisé en ce que l'autre extrémité (47, 48) de la branche transversale (32) fait saillie hors du matériau de remplissage (50).

14. Moteur électrique selon la revendication 12 ou 13, caractérisé en ce que le matériau de remplissage est une résine et notamment une résine du type polyuréthane.

15. Pompe hydraulique équipée du moteur selon l'une quelconque des revendications précédentes.

## Claims

1. Electric motor (1) of the type comprising a rotor (8) rotating between the two poles of a stator (9) excited by the electrical field of a winding (10) formed by an exciter coil wound on a winding support (23) comprising a tubular housing (27), in which the magnetic core (21, 22) of said stator is housed, characterised in that it comprises an earthing section (30, 31) electrically connecting the magnetic core (21, 22) to the earth connection (114c, 113), and that this earth connection is disposed in said central tubular housing (27) to extend on the outside and form a junction pin (46, 460) to be connected to the earth connection.

2. Electric motor (1) according to Claim 1, characterised in that the earthing section (30) comprises a longitudinal branch (31) disposed between the magnetic core (21, 22) and one of the inside walls (33) of the winding support (23).

3. Electric motor (1) according to Claim 2, characterised in that the stator (9) is formed by two independent pole faces (18, 19), the magnetic cores (21, 22) of which are engaged in the central tubular housing (27) of the winding support (23), and that an electrical connection piece and earthing section (30, 31) electrically connecting the magnetic cores (21, 22) of each of the two pole faces (18, 19) is disposed in said central tubular housing (27) to extend on the outside and form a junction pin (46, 460) to be connected to the earth connection (114c, 113).

4. Electric motor (1) according to Claim 3, characterised in that the longitudinal branch (31) is disposed between the lower surfaces (42, 43) of the two magnetic cores (21, 22) and the lower inside wall (33) of the tubular housing (27).

5. Electric motor (1) according to Claim 4, characterised in that the earth junction pin (46) is disposed in the plane of terminal strips (28, 29) of the winding (10) and parallel thereto.

6. Electric motor (1) according to Claim 5, characterised in that the width of the earth junction pin (46) differs from that of the terminal strips (28, 29).

7. Electric motor (1) according to Claim 6, characterised in that the lengh of the earthing pin (46) is such that its end (461) is set back in relation to the ends (280, 290) of the two terminal strips (28, 29).

8. Electric motor (1) according to any one of the preceding Claims, characterised in that the lower inside wall (33) comprises a guide groove (34) to receive the longitudinal branch (31).

9. Electric motor (1) according to Claim 8, characterised in that retention means are provided for the longitudinal branch (31) formed by at least one notch (37, 38) provided on said branch cooperating with at least one projection (35, 36) provided in the lower inside wall (33) of the winding support (23).

10. Electric motor (1) according to any one of the preceding Claims, characterised in that the longitudinal branch (31) comprises a series of undulations (310).

11. Electric motor (1) according to any one of the preceding Claims, characterised in that the earthing section (30) is a metal piece in the general shape of a T, the longitudinal branch (31) being extended laterally on both sides of the T plane of general symmetry by a vertically folded transverse branch (32), one of the ends (46) of which forms the earthing junction pin.

12. Electric motor (1) according to any one of the preceding Claims, characterised in that the stator assembly (45) formed by two pole faces (18, 19) and the exciter assembly (10, 23, 28, 29) is housed in the interior cavity (300) of a motor housing (3) made from an electrically insulating filler material (50), in which said stator assembly (45) is completely embedded.

13. Electric motor (1) according to Claim 12, characterised in that the other end (47, 48) of the transverse branch (32) projects out of the filler material (50).

14. Electric motor (1) according to Claim 12 or 13, characterised in that the filler material is a resin, in particular a polyurethane resin.

15. Hydraulic pump equipped with the motor according to any one of the preceding Claims.

## Patentansprüche

1. Elektromotor (1) des Typs mit Rotor (8), welcher sich zwischen den beiden Polen eines Stators (9) dreht, der durch das elektrische Feld einer Spule (10) erregt wird, die eine Feldwicklung umfaßt, die auf einen Spulenträger (23) gewickelt ist, der ein röhrenförmiges Lagerteil (27) umfaßt, in dem der magnetische Kern (21, 22) des Stators gelagert ist, dadurch gekennzeichnet, daß er ein Erdungsteil (30, 31) umfaßt, welches den magnetischen Kern (21, 22) mit dem Masseanschluß (114c, 113) elektrisch verbindet, sowie dadurch, daß dieser Masseanschluß im röhrenförmigen Lagerteil (27) untergebracht ist, sich nach außen erstreckt und einen Anschlußstift (46, 460) darstellt, der mit dem Masseanschluß verbindbar ist.

2. Elektromotor gemäß Anspruch 1, dadurch gekennzeichnet, daß das Erdungsteil (30) ein Längsteil (31) umfaßt, welches zwischen dem magnetischen Kern (21, 22) und einer der inneren Wände (33) des Spulenträgers (23)angebracht ist.

3. Elektromotor (1) gemäß Anspruch 2, dadurch gekennzeichnet, daß der Stator (9) zwei unabhängige polare Massen (18, 19) umfaßt, deren magnetische Kerne (21, 22) in das mittlere, röhrenförmige Lagerteil (27) des Spulenträgers (23) eingreifen, sowie dadurch, daß ein elektrisches Verbindungs- und Erdungsteil (30, 31), welches die magnetischen Kerne (21, 22) jeder der beiden polaren Massen (18, 19) verbindet, im mittleren, röhrenförmigen Lagerteil (27) angeordnet ist, sich nach außen erstreckt und einen Anschlußstift (46, 460) darstellt, welcher mit dem Masseanschluß (114c, 113) verbindbar ist.

4. Elektromotor gemäß Anspruch 3, dadurch gekennzeichnet, daß das Längsteil (31) zwischen den unteren Flächen (42, 43) der beiden magnetischen Kerne (21, 22) und der unteren Innenwand (33) des röhrenförmigen Lagerteils (27) angeordnet ist.

5. Elektromotor gemäß Anspruch 4, dadurch gekennzeichnet, daß der Anschlußstift der Erdung (46) auf der Ebene der Verbindungsplättchen (28, 29) der Spule (10) und parallel zu diesen angeordnet ist.

6. Elektromotor gemäß Anspruch 5, dadurch gekennzeichnet, daß der Anschlußstift der Erdung (46) eine andere Länge aufweist als die Verbindungsplättchen (28, 29).

7. Elektromotor gemäß Anspruch 6, dadurch gekennzeichnet, daß die Länge des Anschlußstiftes der Erdung (46) so bemessen ist, daß sein Endstück (461) im Vergleich zu den Endstücken (280, 290) der beiden Verbindungsplättchen (28, 29) zurückgesetzt angeordnet ist.

8. Elektromotor gemäß einem der vorangegangenen Ansprüche, dadurch gekennzeichnet, daß die untere Innenwand (33) eine führende Vertiefung (34) umfaßt, welche das Längsteil (31) aufnimmt.

9. Elektromotor gemäß Anspruch 8, dadurch gekennzeichnet, daß Mittel zum Festhalten des Längsteils (31) vorhanden sind, welche aus dem Zusammenwirken zumindest einer Einkerbung (37, 38), die in diesem Längsteil vorhanden ist, mit zumindest einem vorsprung (35, 36), der in der unteren Innenwand (33) des Spulenträgers (23) vorhanden ist, bestehen.

10. Elektromotor gemäß einem der vorangegangenen Ansprüche, dadurch gekennzeichnet, daß das Längsteil (31) gewellt ist.

11. Elektromotor gemäß einem der vorangegangenen Ansprüche, dadurch gekennzeichnet, daß das Erdungsteil (30) ein T-förmiges Metallstück ist, wobei das Längsteil (31) an einem Ende ein sich beiderseits der Symmetrieachse T erstreckendes, vertikal gebogenes Querteil (32) aufweist, dessen eines Endstück (46) den Anschlußstift der Erdung darstellt.

12. Elektromotor gemäß einem der vorangegangenen Ansprüche, dadurch gekennzeichnet, daß die feststehende Konstruktion (45), die die beiden polaren Massen (18, 19) und die Erregungskonstruktion (10, 23, 28, 29) umfaßt, im Hohlraum (300) eines Motorengehäuses (3) untergebracht ist, welcher ein Füll- und Isoliermaterial (50) umfaßt, in welches die feststehende Konstruktion (45) vollständig eingebettet ist.

13. Elektromotor gemäß Anspruch 12, dadurch gekennzeichnet, daß das andere Endstück (47, 48) des Querteils (32) aus dem Füllmaterial (50) herausragt.

14. Elektromotor gemäß Anspruch 12 oder Anspruch 13, dadurch gekennzeichnet, daß es sich bei dem Füllmaterial um ein Harz, und insbesondere um ein Polyurethanharz, handelt.

15. Hydropumpe, ausgestattet mit einem Motor gemäß einem der vorangegangenen Ansprüche.
